(19) Europäisches Patentamt / European Patent Office / Office européen des brevets

(11) **EP 3 264 565 B1**

(12) **EUROPEAN PATENT SPECIFICATION**

(45) Date of publication and mention
of the grant of the patent:
**10.01.2024 Bulletin 2024/02**

(21) Application number: **15892181.7**

(22) Date of filing: **19.05.2015**

(51) International Patent Classification (IPC):
*H02J 7/04* (2006.01)          *H04M 19/08* (2006.01)

(52) Cooperative Patent Classification (CPC):
**H04M 19/08; H02J 7/04**

(86) International application number:
**PCT/CN2015/079281**

(87) International publication number:
**WO 2016/183802 (24.11.2016 Gazette 2016/47)**

(54) **CHARGING METHOD AND TERMINAL**

LADEVERFAHREN UND ENDGERÄT

PROCÉDÉ DE CHARGE ET TERMINAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.01.2018 Bulletin 2018/01**

(73) Proprietor: **Honor Device Co., Ltd.
Shenzhen, Guangdong 518040 (CN)**

(72) Inventors:
• **SUN, Wenyong
Shenzhen
Guangdong 518129 (CN)**
• **HU, Jun
Shenzhen
Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**EP-A1- 2 667 207          CN-A- 101 682 197
CN-A- 101 789 614          CN-A- 102 377 211
CN-A- 104 253 458          CN-A- 104 348 238
CN-U- 203 537 000          CN-U- 204 258 366
JP-A- 2009 050 079         JP-A- 2015 012 710
US-B1- 6 479 968**

## Description

## TECHNICAL FIELD

Embodiments of the present invention relate to the field of information technologies, and in particular, to a charging method, and a terminal.

## BACKGROUND

With rapid development of mobile phones, there are more types of mobile phones in a market. Adapters and USB (Universal Serial Bus, Universal Serial Bus, USB for short) cables, as necessary accessories of the mobile phones, are also of a wide variety. Generally, there are multiple mobile phone chargers in each ordinary family. These chargers mostly have different power and electrical characteristics. In addition, according to a unified port standard set by Ministry of Industry and Information Technology, different mobile phones may be charged by using different USB cables. Currently, smartphones all have relatively large battery capacities, and charging currents set by the mobile phones are also relatively large, so that charging the mobile phones by using original chargers may have no problem. There are also many chargers that are non-original but conform to national standards in a family. However, when a mobile phone is charged by using a non-original adapter, overcurrent protection is generated by the adapter and charging cannot be performed, because a charging current set by the mobile phone is excessively large and exceeds a rated current of the adapter. When a user uses a USB cable of relatively poor quality, a voltage shunted to the cable is excessively large, and a voltage reaching a mobile phone end is excessively low due to an impedance problem of the USB cable. Consequently, there are problems that charging is slow, charging cannot even be performed, and the like.

EP 2 667 207 A1 discloses a charging apparatus and method for determining conduction state, and in particular a device with a connector having connection terminals electrically connectable to an object to be charged; power lines electrically connected to the connection terminals; a charger connected to the power lines, for charging the object to be charged; a holding part for holding the connector; and determining means for determining the conduction state on the power lines and the connection terminals. The holding part has conduction means for bringing about conduction through the connection terminals.

US 6 479 968 B1 discloses a method for sensing the parasitic impedance in a battery charging system and compensating for these parasitic impedances. In one embodiment, the voltage of the system is measured with no charging current applied. Next, a charging current is applied, and a second voltage is measured. The parasitic impedance is then extrapolated and multiplied by a predetermined rapid charging current. The product is added to a predetermined cell termination voltage. The charging means remains in a rapid charge current mode until a voltage equal to the sum of the impedance-current product and the predetermined voltage is reached, wherein the current is reduced to a maintenance charging level.

JP-2015012710-A discloses an electronic apparatus system which is composed of a charger and an electronic apparatus. The charger includes a power output unit, an output stop unit, and a charging cable. The electronic apparatus is composed of a terminal part and a secondary battery. The terminal part includes a cut-off circuit, a shunt resistor, a current detection unit, a voltage detection unit, an impedance calculation unit, a charging-cable status determination unit, and an electrical path, and has an internal load. The impedance calculation unit calculates the impedance of the charging cable on the basis of the value of a charging voltage, the value of a charging current, the value of a secondary-battery charging current, and the value of a secondary-battery charging voltage.

## SUMMARY

The present invention provides a charging method, and a terminal, to enable a terminal to adapt to different charging apparatuses, improving charging experience of a user.

A first aspect of the present invention provides a charging method of a terminal performed by the terminal, where the method includes: identifying, when it is detected that a charging apparatus is inserted into a charging port of a terminal by using a charging cable, a first voltage value of the charging port; setting a second charging current; identifying a second voltage value of the charging port at the second charging current; calculating a cable impedance of the charging cable according to the first voltage value, the second charging current, and the second voltage value; and adjusting a suitable charging current of the charging apparatus according to the cable impedance of the charging cable, wherein the adjusting comprises: adjusting a third charging current to a fourth charging current; identifying a fourth voltage value of the charging port at the fourth charging current; calculating an output voltage value of the charging apparatus according to a rated voltage value of the charging apparatus, the fourth charging current and the cable impedance of the charging cable; and determining, if the fourth voltage value is less than the output voltage value of the charging apparatus, that the third charging current is the suitable charging current of the charging apparatus.

With reference to the first aspect, in a first possible implementation manner of the first aspect, the calculating a cable impedance of the charging cable according to the first voltage value, the second charging current, and the second voltage value is specifically: $R = (V_1 - V_2)/I_2$, where R is the cable impedance of the charging cable, $V_1$ is the first voltage value, $V_2$ is the second voltage value, and $I_2$ is the second charging current.

With reference to the first possible implementation manner of the first aspect, in a second possible implementation manner of the first aspect, the method further includes: prompting a user when the cable impedance of the charging cable is greater than a preset impedance value.

With reference to the third possible implementation manner of the first aspect, in a fourth possible implementation manner of the first aspect, the calculating an output voltage value of the charging apparatus according to a rated voltage value of the charging apparatus, the fourth charging current and the cable impedance of the charging cable is specifically: $V = V_{adapter} - I_4 \times R$, where V is the output voltage value of the charging apparatus, $V_{adapter}$ is the rated voltage value of the charging apparatus, $I_4$ is the fourth charging current, and R is the cable impedance of the charging cable.

A second aspect of the present invention provides a terminal, where the terminal includes: one or more processors; a memory; and one or more programs, where the one or more programs are stored in the memory, and are configured to be executed by the one or more processors, and the one or more programs include an instruction, where the instruction is used for: identifying, when it is detected that a charging apparatus is inserted into a charging port of a terminal by using a charging cable, a first voltage value of the charging port; setting a second charging current; identifying a second voltage value of the charging port at the second charging current; calculating a cable impedance of the charging cable according to the first voltage value, the second charging current, and the second voltage value; and adjusting a suitable charging current of the charging apparatus according to the cable impedance of the charging cable, wherein the adjusting comprises: adjusting a third charging current to a fourth charging current; identifying a fourth voltage value of the charging port at the fourth charging current; calculating an output voltage value of the charging apparatus according to a rated voltage value of the charging apparatus, the fourth charging current and the cable impedance of the charging cable; and determining, if the fourth voltage value is less than the output voltage value of the charging apparatus, that the third charging current is the suitable charging current of the charging apparatus.

With reference to the second aspect, in a first possible implementation manner of the second aspect, the calculating a cable impedance of the charging cable according to the first voltage value, the second charging current, and the second voltage value is specifically: $R = (V_1 - V_2)/I_2$, where R is the cable impedance of the charging cable, $V_1$ is the first voltage value, $V_2$ is the second voltage value, and $I_2$ is the second charging current.

With reference to the first possible implementation manner of the second aspect, in a second possible implementation manner of the second aspect, the instruction is further used for prompting a user when the cable impedance of the charging cable is greater than a preset impedance value.

With reference to the third possible implementation manner of the second aspect, in a fourth possible implementation manner of the second aspect, the calculating an output voltage value of the charging apparatus according to a rated voltage value of the charging apparatus, the fourth charging current and the cable impedance of the charging cable is specifically: $V = V_{adapter} - I_4 \times R$, where V is the output voltage value of the charging apparatus, $V_{adapter}$ is the rated voltage value of the charging apparatus, $I_4$ is the fourth charging current, and R is the cable impedance of the charging cable.

In the foregoing technical solutions, the present invention provides a charging and a terminal. By identifying, when it is detected that a charging apparatus is inserted into a charging port of a terminal by using a charging cable, a first voltage value of the charging port; setting a second charging current; identifying a second voltage value of the charging port at the second charging current; calculating a cable impedance of the charging cable according to the first voltage value, the second charging current, and the second voltage value; and adjusting a suitable charging current of the charging apparatus according to the cable impedance of the charging cable, the terminal can adapt to different charging apparatuses, improving charging experience of a user.

**BRIEF DESCRIPTION OF DRAWINGS**

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic diagram of charging a terminal by a charging apparatus;
FIG. 2 is a schematic diagram of a charging method according to an embodiment of the present invention;
FIG. 3 is a schematic diagram of a method for adjusting a charging current according to an embodiment of the present invention;
FIG. 4 is a schematic diagram according to an example of the present invention;
FIG. 5 is a schematic structural diagram of a first adjustment unit according to an example of the present invention; and
FIG. 6 is a schematic diagram of another terminal according to an embodiment of the present invention.

## DESCRIPTION OF EMBODIMENTS

To make the objectives, technical solutions, and advantages of the embodiments of the present invention clearer, the following clearly describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

Ordinals such as "first" and "second" mentioned in the embodiments of the present invention, unless indeed indicating orders according to the context, should be considered to be used merely for distinguishing.

A terminal in the embodiments of the present invention may include a mobile phone, a tablet computer, an MP3 player, a wearable device such as a smart watch, and the like.

When a user charges the terminal by using a charging apparatus such as a non-original adapter, because a charging current that is set by the terminal such as a mobile phone is relatively large and exceeds a rated current of the adapter, overcurrent protection is generated by the charging apparatus, and charging cannot be performed. When the user uses a charging cable of relatively poor quality, for example, a USB cable, a voltage shunted to the cable is excessively large, and a voltage reaching a mobile phone end is relatively low due to an impedance problem of the USB cable. Consequently, there are problems that charging is slow, charging cannot even be performed, and the like. In addition, because the cable impedance of the charging cable of relatively poor quality is relatively large, there is relatively much heat generated from the charging cable, and this situation is relatively dangerous.

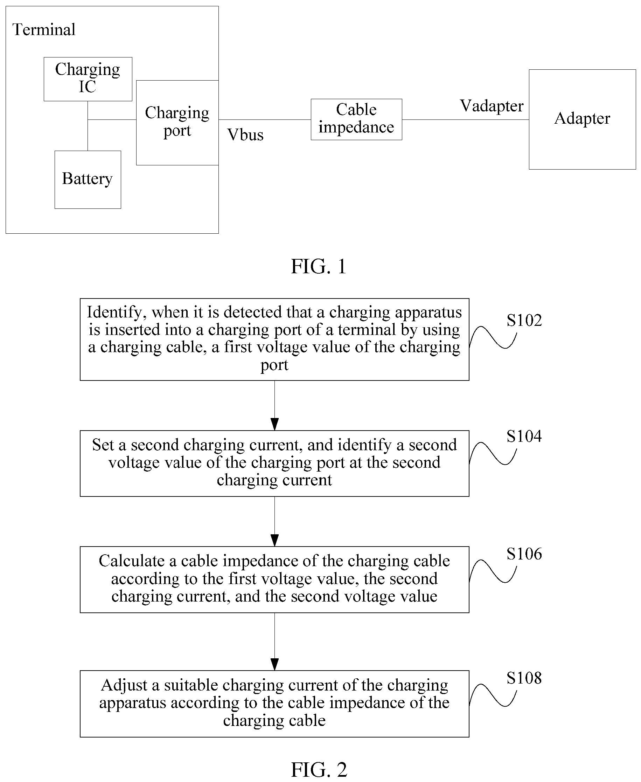

The following describes, by using an example in which the charging apparatus is an adapter and the terminal is a mobile phone, voltage changes of a charging port of the mobile phone when the mobile phone is charged by the adapter. FIG. 1 is a schematic diagram of charging the terminal by the adapter. When the adapter is inserted into the terminal to charge the terminal, the terminal may identify whether the adapter is an original adapter by detecting whether an output voltage of the adapter is excessively low. If the adapter is not an original adapter of the terminal, after the adapter is connected to the charging port of the terminal by using a charging cable, a charging IC (Integrated Chip, integrated chip, IC for short) of the mobile phone may set an initial charging current $I_0$, for example, $I_0 = 500$ *ma*. In this case, because the charging current is relatively small, and is less than a rated charging current of the adapter, it may be considered that the output voltage V of the adapter is equal to a voltage $V_{bus}$ of the charging port. The terminal may obtain the voltage $V_{bus}$ of the charging port by detecting the charging port by using the charging IC. Then, the charging IC of the mobile phone gradually improves the charging current with a unit of $\Delta I$, that is, $I_i = I_0 + \Delta I \times i$. $I_i$ is an improved charging current, $I_0$ is the preset initial charging current, $\Delta I$ is an adjustment value of the charging current, i is a nonnegative integer, and i=0, 1, 2, 3, .... For example, $\Delta I = 100$ ma. Because there is a cable impedance R on the charging cable, as the charging current $I_i$ is constantly improved, the output voltage V of the adapter decreases gradually. The charging IC detects the voltage value $V_{bus}$ of the charging port at any time, and $V_{bus}$ also decreases gradually as the charging current $I_i$ is improved. Before the output voltage of the adapter is pulled down by an overcurrent, it may be considered that V is basically equal to $V_{bus}$. When $V_{bus}$ gradually decreases and falls down to a value near a preset voltage value, the adapter stops charging the mobile phone because of existence of overcurrent protection.

A rated voltage of the adapter is marked as $V_{adapter}$, the output voltage V of the adapter gradually decreases as the charging current $I_i$ is improved, and there is the following relationship between the output voltage V of the adapter and the rated voltage $V_{adapter}$ of the adapter: $V = V_{adapter} - I_i \times R$. It can be seen that V is the output voltage of the adapter obtained through calculation in consideration of existence of the cable impedance R. $V_{bus}$ is the voltage of the charging port of the terminal detected by the charging IC. V and $V_{bus}$ may be or may not be equal.

## Embodiment 1

FIG. 2 shows a charging method according to this embodiment of the present invention. The method may be performed by a terminal such as a mobile phone, or a tablet computer. The method includes the following steps.

S102: Identify, when it is detected that a charging apparatus is inserted into a charging port of a terminal by using a charging cable, a first voltage value of the charging port.

The charging apparatus may be an apparatus such as an adapter or a mobile power pack that can charge the terminal. The adapter is also referred to as a charger, and may be roughly divided into a travel charger, a docking charger, and a maintenance charger. The charging port of the terminal may be a port that can connect the terminal and the charging apparatus, such as a USB port, a mini USB port, a USB 3.0 port, a thunderbolt port, or a USB-C port. Commonly used charging cables include a USB charging cable, a thunderbolt (thunderbolt) charging cable from Apple Inc., and the like. Specifically, the first voltage value of the charging port may be identified by means of detection of a charging IC of the terminal.

S104: Set a second charging current, and identify a second voltage value of the charging port at the second charging current.

If the charging apparatus is a non-original charging apparatus, the terminal may preset a second charging current when the charging apparatus is just inserted into the charging port of the terminal, to serve as an initial charging current. A charging current refers to an output current of the charging apparatus when the charging apparatus charges the terminal. The initial charging current is generally less than a rated current of the charging apparatus. The terminal may identify, by using the charging IC of the terminal, the second voltage value of the charging port at the second charging current.

S106: Calculate a cable impedance of the charging cable according to the first voltage value, the second charging current, and the second voltage value.

Different types of charging cables have different cable impedances. A cable impedance of a charging cable of good quality is approximately 300 m$\Omega$, and a cable impedance of a charging cable of poorer quality is approximately 700 m$\Omega$. A cable impedance of a charging cable can be obtained through calculation in step S106. If the cable impedance obtained through calculation exceeds a preset impedance value, a user may be reminded to replace the charging cable because if the cable impedance is relatively large, a case in which charging is slow or charging cannot even be performed occurs; and if charging is forced, insecure factors such as heat generation of the charging cable are caused.

S108: Adjust a suitable charging current of the charging apparatus according to the cable impedance of the charging cable.

A charging current of the charging apparatus obtained through adjustment in step S108 is within a range of a rated output current of the adapter, and is therefore the suitable charging current of the charging apparatus. When the charging current output by the adapter is within a range of a rated current of the adapter, an output voltage of the adapter is stable, so that the terminal can be better charged, improving charging experience of the user.

In this embodiment of the present invention, a cable impedance of a charging cable is calculated, and a charging current of a charging apparatus is adjusted to a suitable charging current, so that the terminal can adapt to different charging apparatuses, improving charging experience of a user.

Specifically, the calculating a cable impedance of the charging cable according to the first voltage value, the second charging current, and the second voltage value in step S106 may use the following formula:
$R = (V_1 - V_2)/I_2$, where R is the cable impedance of the charging cable, $V_1$ is the first voltage value, $V_2$ is the second voltage value, and $I_2$ is the second charging current.

Optionally, when the cable impedance of the charging cable obtained through calculation is greater than a preset impedance value, a user is prompted. The preset impedance value may be set according to a requirement, for example, the preset impedance value may be 650 m$\Omega$. When the cable impedance of the charging cable obtained through calculation is greater than 650 m$\Omega$, the user is prompted, and the user may be reminded to replace the charging cable because if the cable impedance is relatively large, a case in which charging is slow or charging cannot even be performed occurs; and if charging is forced, insecure factors such as heat generation of the charging cable are caused. There are various manners in which the user is reminded. The user may be reminded, on a UI (User Port, user port, UI for short) of the terminal, that the charging cable is not suitable to charge the terminal; and replace the charging cable. Alternatively, the user may be reminded to replace the charging cable in a manner in which an indicator light of the terminal blinks.

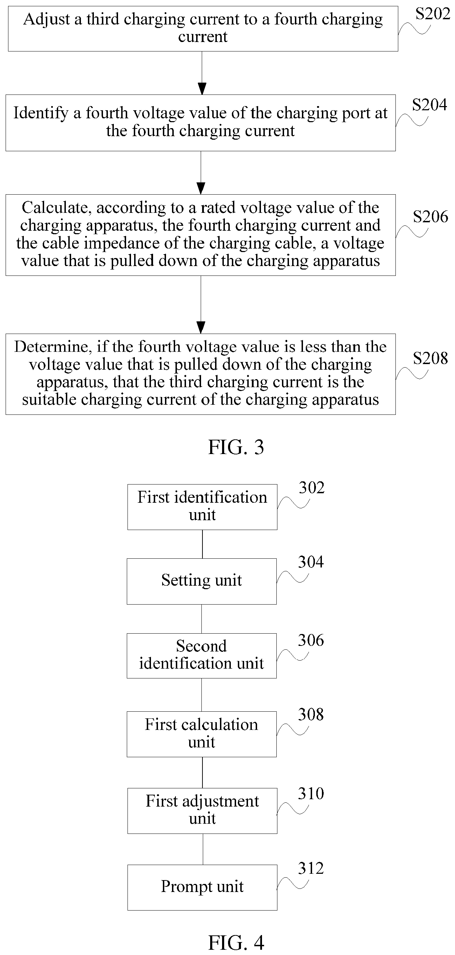

Specifically, the adjusting a suitable charging current of the charging apparatus according to the cable impedance of the charging cable in step S108 includes steps shown in FIG. 3.

S202: Adjust a third charging current to a fourth charging current.

The third charging current may be a preset charging current value, and may be set by the charging IC of the terminal. The third charging current may be adjusted to the fourth charging current in various manners. For example, the third charging current is adjusted to the fourth charging current by directly adding one $\Delta I$, or by gradually increasing the current by means of step improvement. Refer to the foregoing descriptions about the charging current $I_i$ for a specific method for gradually improving a current.

S204: Identify a fourth voltage value of the charging port at the fourth charging current.

When the charging current is the fourth charging current, the charging IC of the terminal identifies the fourth voltage value of the charging port.

S206: Calculate an output voltage value of the charging apparatus according to a rated voltage value of the charging apparatus, the fourth charging current and the cable impedance of the charging cable.

The rated voltage value of the charging apparatus is $V_{adapter}$. Because there is the cable impedance, when the rated voltage of the charging apparatus reaches the charging port of the terminal through the charging cable, the output voltage value of the charging apparatus is not equal to the rated voltage of the charging apparatus, and the output voltage value of the charging apparatus may be calculated according to step S206.

S208: Determine, if the fourth voltage value is less than the output voltage value of the charging apparatus, that the third charging current is the suitable charging current of the charging apparatus.

The fourth voltage value is a voltage value of the charging port of the terminal that is detected by using the charging IC by the terminal. The output voltage value of the charging apparatus is a theoretical output voltage value of the charging apparatus that is obtained through calculation. If the fourth voltage value is less than the output voltage value of the charging apparatus, indicating that the output voltage of the charging apparatus is pulled down by an overcurrent, the fourth charging current may have exceeded a range of a rated current of the charging apparatus, and is not the suitable charging current of the charging apparatus, and the third charging current is the suitable charging current of the charging apparatus. The third charging current obtained in this manner is within the range of the rated current of the charging apparatus. The output voltage of the charging apparatus is stable when the output current of the charging apparatus is within the range of the rated current, so that the terminal can be better charged, improving charging experience.

The calculating an output voltage value of the charging apparatus according to a rated voltage value of the charging apparatus, the fourth charging current and the cable impedance of the charging cable in step S206 may specifically use the following formula:

$V = V_{adapter} - I_4 \times R$, where V is the output voltage value of the charging apparatus, $V_{adapter}$ is the rated voltage value of the charging apparatus, $I_4$ is the fourth charging current, and R is the cable impedance of the charging cable.

According to the charging method provided in this embodiment of the present invention, by identifying, when it is detected that a charging apparatus is inserted into a charging port of a terminal by using a charging cable, a first voltage value of the charging port; setting a second charging current; identifying a second voltage value of the charging port at the second charging current; calculating a cable impedance of the charging cable according to the first voltage value, the second charging current, and the second voltage value; and adjusting a suitable charging current of the charging apparatus according to the cable impedance of the charging cable, the terminal can adapt to different charging apparatuses, and can be better charged, improving charging experience of a user.

**Example 1**

FIG. 4 shows a charging apparatus. The charging apparatus includes:

a first identification unit 302, configured to identify, when it is detected that a charging apparatus is inserted into a charging port of a terminal by using a charging cable, a first voltage value of the charging port;
a setting unit 304, configured to set a second charging current;
a second identification unit 306, configured to identify a second voltage value of the charging port at the second charging current;
a first calculation unit 308, configured to calculate a cable impedance of the charging cable according to the first voltage value, the second charging current, and the second voltage value; and
a first adjustment unit 310, configured to adjust a suitable charging current of the charging apparatus according to the cable impedance of the charging cable.

Specifically, the first calculation unit 308 calculates the cable impedance of the charging cable by using the following formula: $R = (V_1 - V_2)/I_2$, where R is the cable impedance of the charging cable, $V_1$ is the first voltage value, $V_2$ is the second voltage value, and $I_2$ is the second charging current.

Optionally, the charging apparatus further includes a prompt unit 312, configured to prompt a user when the cable impedance of the charging cable is greater than a preset impedance value.

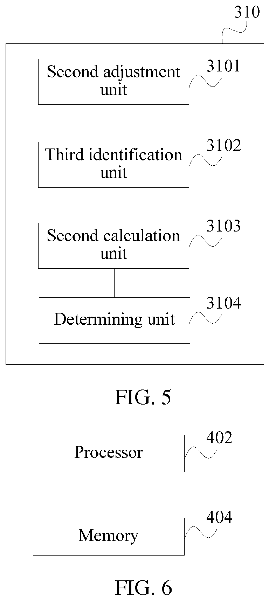

Specifically, as shown in FIG. 5, the first adjustment unit 310 includes:

a second adjustment unit 3101, configured to adjust a third charging current to a fourth charging current;
a third identification unit 3102, configured to identify a fourth voltage value of the charging port at the fourth charging current;
a second calculation unit 3103, configured to calculate an output voltage value of the charging apparatus according to a rated voltage value of the charging apparatus, the fourth charging current and the cable impedance of the charging cable; and
a determining unit 3104, configured to determine, if the fourth voltage value is less than the output voltage value of the charging apparatus, that the third charging current is the suitable charging current of the charging apparatus.

Specifically, the second calculation unit 3103 is specifically configured to: $V = V_{adapter} - I_4 \times R$, where V is the output voltage value of the charging apparatus, $V_{adapter}$ is the rated voltage value of the charging apparatus, $I_4$ is the fourth charging current, and R is the cable impedance of the charging cable.

**Embodiment 2**

FIG. 6 shows a terminal according to this embodiment of the present invention. The terminal includes: one or more processors 402; a memory 404; and one or more programs. The one or more programs are stored in the memory, and are configured to be executed by the one or more processors. The one or more programs include an instruction, where the instruction is used for:

identifying, when it is detected that a charging apparatus is inserted into a charging port of a terminal by using a charging cable, a first voltage value of the charging port;
setting a second charging current;
identifying a second voltage value of the charging port at the second charging current;

calculating a cable impedance of the charging cable according to the first voltage value, the second charging current, and the second voltage value; and

adjusting a suitable charging current of the charging apparatus according to the cable impedance of the charging cable.

Specifically, the calculating a cable impedance of the charging cable according to the first voltage value, the second charging current, and the second voltage value is specifically:

$R = (V_1 - V_2)/I_2$, where R is the cable impedance of the charging cable, $V_1$ is the first voltage value, $V_2$ is the second voltage value, and $I_2$ is the second charging current.

Optionally, when the cable impedance of the charging cable is greater than a preset impedance value, a user is prompted.

Specifically, the adjusting a suitable charging current of the charging apparatus according to the cable impedance of the charging cable includes:

adjusting a third charging current to a fourth charging current;

identifying a fourth voltage value of the charging port at the fourth charging current;

calculating an output voltage value of the charging apparatus according to a rated voltage value of the charging apparatus, the fourth charging current and the cable impedance of the charging cable; and

determining, if the fourth voltage value is less than the output voltage value of the charging apparatus, that the third charging current is the suitable charging current of the charging apparatus.

Specifically, the calculating an output voltage value of the charging apparatus according to a rated voltage value of the charging apparatus, the fourth charging current and the cable impedance of the charging cable is specifically: $V = V_{adapter} - I_4 \times R$, where V is the output voltage value of the charging apparatus, $V_{adapter}$ is the rated voltage value of the charging apparatus, $I_4$ is the fourth charging current, and R is the cable impedance of the charging cable.

**Embodiment 3**

This embodiment of the present invention further provides a computer-readable storage medium. One or more programs are stored in the computer-readable storage medium, and the one or more programs include an instruction. When executed by the terminal, the instruction enables the terminal to perform any method according to Embodiment 1.

Finally, it should be noted that the foregoing embodiments are merely examples for describing the technical solutions of the present invention other than limiting the present invention. Although the present invention and benefits of the present invention are described in detail with reference to the foregoing embodiments, a person of ordinary skill in the art should understand that they may still make modifications to the technical solutions described in the foregoing embodiments without departing from the scope of the claims of the present invention.

**Claims**

1. A charging method for charging a terminal, comprising:

identifying (S102), by the terminal, when it is detected that a charging apparatus is inserted into a charging port of the terminal by using a charging cable, a first voltage value of the charging port;

setting (S104), by the terminal, a second charging current;

identifying a second voltage value of the charging port at the second charging current;

calculating (S106), by the terminal, a cable impedance of the charging cable according to the first voltage value, the second charging current, and the second voltage value; and

adjusting (S108), by the terminal, a suitable charging current of the charging apparatus according to the cable impedance of the charging cable, **characterized in that** the adjusting (S108) comprises:

adjusting (S202) a third charging current to a fourth charging current;

identifying (S204) a fourth voltage value of the charging port at the fourth charging current;

calculating (S206) an output voltage value of the charging apparatus according to a rated voltage value of the charging apparatus, the fourth charging current and the cable impedance of the charging cable; and

determining (S208), if the fourth voltage value is less than the output voltage value of the charging apparatus, that the third charging current is the suitable charging current of the charging apparatus.

2. The method according to claim 1, wherein the calculating (S106) a cable impedance of the charging cable according to the first voltage value, the second charging current, and the second voltage value is specifically:

$R = (V_1 - V_2)/I_2$, wherein R is the cable impedance of the charging cable, $V_1$ is the first voltage value, $V_2$ is the second voltage value, and $I_2$ is the second charging current.

3. The method according to claim 2, further comprising: prompting a user when the cable impedance of the charging cable is greater than a preset impedance value.

4. The method according to any one of claims 1 to 3, wherein the calculating (S206) an output voltage value of the charging apparatus according to a rated voltage value of the charging apparatus, the fourth charging current and the cable impedance of the charging cable is specifically:
$V = V_{adapter} - I_4 \times R$, wherein V is the output voltage value of the charging apparatus, $V_{adapter}$ is the rated voltage value of the charging apparatus, $I_4$ is the fourth charging current, and R is the cable impedance of the charging cable.

5. A terminal, comprising:

   one or more processors;
   a memory; and
   one or more programs, wherein
   the one or more programs are stored in the memory, and are configured to be executed by the one or more processors, and the one or more programs comprise an instruction, wherein the instruction is used for:

   identifying, when it is detected that a charging apparatus is inserted into a charging port of a terminal by using a charging cable, a first voltage value of the charging port;
   setting a second charging current;
   identifying a second voltage value of the charging port at the second charging current;
   calculating a cable impedance of the charging cable according to the first voltage value, the second charging current, and the second voltage value; and
   adjusting a suitable charging current of the charging apparatus according to the cable impedance of the charging cable, **characterized in that** the adjusting comprises:

   adjusting a third charging current to a fourth charging current;
   identifying a fourth voltage value of the charging port at the fourth charging current;
   calculating an output voltage value of the charging apparatus according to a rated voltage value of the charging apparatus, the fourth charging current and the cable impedance of the charging cable; and
   determining, if the fourth voltage value is less than the output voltage value of the charging apparatus, that the third charging current is the suitable charging current of the charging apparatus.

6. The terminal according to claim 5, wherein the calculating a cable impedance of the charging cable according to the first voltage value, the second charging current, and the second voltage value is specifically:
$R = (V_1 - V_2)/I_2$, wherein R is the cable impedance of the charging cable, $V_1$ is the first voltage value, $V_2$ is the second voltage value, and $I_2$ is the second charging current.

7. The terminal according to claim 6, wherein the instruction is further used for: prompting a user when the cable impedance of the charging cable is greater than a preset impedance value.

8. The terminal according to any one of claims 5 to 7, wherein the calculating an output voltage value of the charging apparatus according to a rated voltage value of the charging apparatus, the fourth charging current and the cable impedance of the charging cable is specifically: $V = V_{adapter} - I_4 \times R$, wherein V is the output voltage value of the charging apparatus, $V_{adapter}$ is the rated voltage value of the charging apparatus, $I_4$ is the fourth charging current, and R is the cable impedance of the charging cable.

**Patentansprüche**

1. Ladeverfahren zum Laden eines Endgeräts, umfassend:

   Identifizieren (S102), durch das Endgerät, wenn erfasst wird, dass eine Ladevorrichtung durch Verwenden eines Ladekabels in einen Ladeanschluss des Endgeräts eingeführt wird, eines ersten Spannungswerts des Ladeanschlusses;
   Einstellen (S104), durch das Endgerät, eines zweiten Ladestroms;
   Identifizieren eines zweiten Spannungswerts des Ladeanschlusses an dem zweiten Ladestrom;
   Berechnen (S106), durch das Endgerät, einer Kabelimpedanz des Ladekabels gemäß dem ersten Spannungswert, dem zweiten Ladestrom und dem zweiten Spannungswert; und Anpassen (S108), durch das Endgerät, eines geeigneten Ladestroms der Ladevorrichtung gemäß der Kabelimpedanz des Ladekabels, **dadurch gekennzeichnet, dass** das Anpassen (S108) umfasst:

   Anpassen (S202) eines dritten Ladestroms an einen vierten Ladestrom;
Identifizieren (S204) eines vierten Spannungswerts des Ladeanschlusses an dem vierten Ladestrom; Berechnen (S206) eines Ausgangsspannungswerts der Ladevorrichtung gemäß einem Nennspannungswert der Ladevorrichtung, des vierten Ladestroms und der Kabelimpedanz des Ladekabels; und
Bestimmen (S208), falls der vierte Spannungswert kleiner als der Ausgangsspannungswert der Ladevorrichtung ist, dass der dritte Ladestrom der geeignete Ladestrom der Ladevorrichtung ist.

2. Verfahren nach Anspruch 1, wobei das Berechnen (S106) einer Kabelimpedanz des Ladekabels gemäß dem ersten Spannungswert, dem zweiten Ladestrom und dem zweiten Spannungswert speziell ist:
$R = (V_1 - V_2)/I_2$, wobei R die Kabelimpedanz des Ladekabels ist, $V_1$ der erste Spannungswert ist, $V_2$ der zweite Spannungswert ist und $I_2$ der zweite Ladestrom ist.

3. Verfahren nach Anspruch 2, ferner umfassend: Auffordern eines Benutzers, wenn die Kabelimpedanz des Ladekabels größer als ein voreingestellter Impedanzwert ist.

4. Verfahren nach einem der Ansprüche 1 bis 3, wobei das Berechnen (S206) eines Ausgangsspannungswerts der Ladevorrichtung gemäß einem Nennspannungswert der Ladevorrichtung, des vierten Ladestroms und der Kabelimpedanz des Ladekabels speziell ist:

$$V = V_{Adapter} - I_4 \times R,$$

wobei V der Ausgangsspannungswert der Ladevorrichtung ist, $V_{Adapter}$ der Nennspannungswert der Ladevorrichtung ist, $I_4$ der vierte Ladestrom ist und R die Kabelimpedanz des Ladekabels ist.

5. Endgerät, umfassend:

einen oder mehrere Prozessoren;
einen Speicher; und
ein oder mehrere Programme, wobei das eine oder die mehreren Programme in dem Speicher gespeichert sind und konfiguriert sind, um durch den einen oder die mehreren Prozessoren ausgeführt zu werden, und das eine oder die mehreren Programme eine Anweisung umfassen, wobei die Anweisung verwendet wird zum:

Identifizieren, wenn erfasst wird, dass eine Ladevorrichtung durch Verwenden eines Ladekabels in einen Ladeanschluss eines Endgeräts eingeführt wird, eines ersten Spannungswerts des Ladeanschlusses;
Einstellen eines zweiten Ladestroms;
Identifizieren eines zweiten Spannungswerts des Ladeanschlusses an dem zweiten Ladestrom;
Berechnen einer Kabelimpedanz des Ladekabels gemäß dem ersten Spannungswert, dem zweiten Ladestrom und dem zweiten Spannungswert; und
Anpassen eines geeigneten Ladestroms der Ladevorrichtung gemäß der Kabelimpedanz des Ladekabels,
**dadurch gekennzeichnet, dass** das Anpassen umfasst:

Anpassen eines dritten Ladestroms an einen vierten Ladestrom;
Identifizieren eines vierten Spannungswerts des Ladeanschlusses an dem vierten Ladestrom;
Berechnen eines Ausgangsspannungswerts der Ladevorrichtung gemäß einem Nennspannungswert der Ladevorrichtung, des vierten Ladestroms und der Kabelimpedanz des Ladekabels; und
Bestimmen, falls der vierte Spannungswert kleiner als der Ausgangsspannungswert der Ladevorrichtung ist, dass der dritte Ladestrom der geeignete Ladestrom der Ladevorrichtung ist.

6. Endgerät nach Anspruch 5, wobei das Berechnen einer Kabelimpedanz des Ladekabels gemäß dem ersten Spannungswert, dem zweiten Ladestrom und dem zweiten Spannungswert speziell ist:
$R = (V_1 - V_2)/I_2$, wobei R die Kabelimpedanz des Ladekabels ist, $V_1$ der erste Spannungswert ist, $V_2$ der zweite Spannungswert ist und $I_2$ der zweite Ladestrom ist.

7. Endgerät nach Anspruch 6, wobei die Anweisung ferner verwendet wird zum: Auffordern eines Benutzers, wenn die Kabelimpedanz des Ladekabels größer als ein voreingestellter Impedanzwert ist.

8. Endgerät nach einem der Ansprüche 5 bis 7, wobei das Berechnen eines Ausgangsspannungswerts der Ladevorrichtung gemäß einem Nennspannungswert der Ladevorrichtung, des vierten Ladestroms und der Kabelimpedanz des Ladekabels speziell ist:
$V = V_{Adapter} - I_4 \times R$, wobei V der Ausgangsspannungswert der Ladevorrichtung ist, $V_{Adapter}$ der Nennspannungswert der Ladevorrichtung ist, $I_4$ der vierte Ladestrom ist und R die Kabelimpedanz des Ladekabels ist.

## Revendications

1. Procédé de charge permettant de charger un terminal, comprenant :

   l'identification (S102), par le terminal, lorsqu'il est détecté qu'un appareil de charge est inséré dans un port de charge du terminal à l'aide d'un câble de charge, d'une première valeur de tension du port de charge ;
   le réglage (S104), par le terminal, d'un deuxième courant de charge ;
   l'identification d'une deuxième valeur de tension du port de charge au deuxième courant de charge ;
   le calcul (S106), par le terminal, d'une impédance de câble du câble de charge en fonction de la première valeur de tension, du deuxième courant de charge et de la deuxième valeur de tension ; et le réglage (S108), par le terminal, d'un courant de charge approprié de l'appareil de charge en fonction de l'impédance de câble du câble de charge, **caractérisé en ce que** le réglage (S108) comprend :

      le réglage (S202) d'un troisième courant de charge à un quatrième courant de charge ;
      l'identification (S204) d'une quatrième valeur de tension du port de charge au quatrième courant de charge ; le calcul (S206) d'une valeur de tension de sortie de l'appareil de charge en fonction d'une valeur de tension nominale de l'appareil de charge, du quatrième courant de charge et de l'impédance de câble du câble de charge ; et la détermination (S208), si la quatrième valeur de tension est inférieure à la valeur de tension de sortie de l'appareil de charge, du fait que le troisième courant de charge est le courant de charge approprié de l'appareil de charge.

2. Procédé selon la revendication 1, dans lequel le calcul (S106) d'une impédance de câble du câble de charge en fonction de la première valeur de tension, du deuxième courant de charge et de la deuxième valeur de tension est spécifiquement :
   R = ($V_1$ - $V_2$)/$I_2$, où R est l'impédance de câble du câble de charge, $V_1$ est la première valeur de tension, $V_2$ est la deuxième valeur de tension, et $I_2$ est le deuxième courant de charge.

3. Procédé selon la revendication 2, comprenant en outre : une invite à un utilisateur lorsque l'impédance de câble du câble de charge est supérieure à une valeur d'impédance prédéfinie.

4. Procédé selon l'une quelconque des revendications 1 à 3, dans lequel le calcul (S206) d'une valeur de tension de sortie de l'appareil de charge en fonction d'une valeur de tension nominale de l'appareil de charge, du quatrième courant de charge et de l'impédance de câble du câble de charge est spécifiquement :
   V = $V_{adaptateur}$ - $I_4 \times$ R, où V est la valeur de tension de sortie de l'appareil de charge, $V_{adaptateur}$ est la valeur de tension nominale de l'appareil de charge, $I_4$ est le quatrième courant de charge, et R est l'impédance de câble du câble de charge.

5. Terminal, comprenant :

   un ou plusieurs processeurs ;
   une mémoire ; et
   un ou plusieurs programmes, dans lequel le ou les programmes sont stockés dans la mémoire, et sont configurés pour être exécutés par le ou les processeurs, et le ou les programmes comprennent une instruction, dans lequel l'instruction est utilisée pour :

      l'identification, lorsqu'il est détecté qu'un appareil de charge est inséré dans un port de charge d'un terminal à l'aide d'un câble de charge, d'une première valeur de tension du port de charge ;
      le réglage d'un deuxième courant de charge ;
      l'identification d'une deuxième valeur de tension du port de charge au deuxième courant de charge ;
      le calcul d'une impédance de câble du câble de charge en fonction de la première valeur de tension, du deuxième courant de charge et de la deuxième valeur de tension ; et
      le réglage d'un courant de charge approprié de l'appareil de charge en fonction de l'impédance de câble du câble de charge, **caractérisé en ce que** le réglage comprend :

         le réglage d'un troisième courant de charge à un quatrième courant de charge ;
         l'identification d'une quatrième valeur de tension du port de charge au quatrième courant de charge ;
         le calcul d'une valeur de tension de sortie de l'appareil de charge en fonction d'une valeur de tension nominale de l'appareil de charge, du quatrième courant de charge et de l'impédance de câble du câble de charge ; et

la détermination, si la quatrième valeur de tension est inférieure à la valeur de tension de sortie de l'appareil de charge, du fait que le troisième courant de charge est le courant de charge approprié de l'appareil de charge.

6. Terminal selon la revendication 5, dans lequel le calcul d'une impédance de câble du câble de charge en fonction de la première valeur de tension, du deuxième courant de charge et de la deuxième valeur de tension est spécifiquement :

   $R = (V_1 - V_2)/I_2$, où R est l'impédance de câble du câble de charge, $V_1$ est la première valeur de tension, $V_2$ est la deuxième valeur de tension, et $I_2$ est le deuxième courant de charge.

7. Terminal selon la revendication 6, dans lequel l'instruction est utilisée en outre pour : inviter un utilisateur lorsque l'impédance de câble du câble de charge est supérieure à une valeur d'impédance prédéfinie.

8. Terminal selon l'une quelconque des revendications 5 à 7, dans lequel le calcul d'une valeur de tension de sortie de l'appareil de charge en fonction d'une valeur de tension nominale de l'appareil de charge, du quatrième courant de charge et de l'impédance de câble du câble de charge est spécifiquement :

   $V = V_{adaptateur} - I_4 \times R$, où V est la valeur de tension de sortie de l'appareil de charge, $V_{adaptateur}$ est la valeur de tension nominale de l'appareil de charge, $I_4$ est le quatrième courant de charge, et R est l'impédance de câble du câble de charge.

FIG. 1

FIG. 2

```
┌─────────────────────────────────────────┐
│ Adjust a third charging current to a fourth charging │ S202
│                 current                   │
└─────────────────────────────────────────┘
                    │
                    ▼
┌─────────────────────────────────────────┐
│ Identify a fourth voltage value of the charging port at │ S204
│        the fourth charging current        │
└─────────────────────────────────────────┘
                    │
                    ▼
┌─────────────────────────────────────────┐
│ Calculate, according to a rated voltage value of the │
│ charging apparatus, the fourth charging current and │ S206
│ the cable impedance of the charging cable, a voltage │
│  value that is pulled down of the charging apparatus │
└─────────────────────────────────────────┘
                    │
                    ▼
┌─────────────────────────────────────────┐
│ Determine, if the fourth voltage value is less than the │
│   voltage value that is pulled down of the charging   │ S208
│       apparatus, that the third charging current is the  │
│   suitable charging current of the charging apparatus │
└─────────────────────────────────────────┘
```

FIG. 3

```
┌─────────────────┐
│ First identification │ 302
│       unit        │
└─────────────────┘
         │
┌─────────────────┐
│   Setting unit    │ 304
└─────────────────┘
         │
┌─────────────────┐
│      Second       │ 306
│ identification unit │
└─────────────────┘
         │
┌─────────────────┐
│ First calculation │ 308
│       unit        │
└─────────────────┘
         │
┌─────────────────┐
│ First adjustment  │ 310
│       unit        │
└─────────────────┘
         │
┌─────────────────┐
│   Prompt unit     │ 312
└─────────────────┘
```

FIG. 4

310

| Second adjustment unit | 3101 |
| Third identification unit | 3102 |
| Second calculation unit | 3103 |
| Determining unit | 3104 |

FIG. 5

| Processor | 402 |
| Memory | 404 |

FIG. 6

**EP 3 264 565 B1**

## REFERENCES CITED IN THE DESCRIPTION

**Patent documents cited in the description**

- EP 2667207 A1
- US 6479968 B1
- JP 2015012710 A